# EUROPEAN PATENT APPLICATION

(11) **EP 4 528 915 A1**
(43) Date of publication of application: **26.03.2025**
(21) Application number: 24775108.4
(22) Date of filing: 08.03.2024
(51) Int. Cl.: H01M 50/591, H01M 50/521, H01M 50/242, H01M 50/522, H01M 50/289, H01M 50/204, C08K 3/36, C08K 3/04, C08G 77/20, C08L 83/04

(54) **FIRE-RESISTANT BUSBAR AND BATTERY PACK INCLUDING SAME**

(30) Priority: 23.03.2023 KR 20230037684
(71) Applicant: LG Energy Solution, Ltd., Seoul 07335 (KR)
(72) Inventor: YUN, Sun Woo, Daejeon 34122 (KR)
(74) Representative: Plasseraud IP
(86) International application number: PCT/KR2024/003010
(87) International publication number: WO 2024/196060

(57) **Abstract**

The present technology provides a fire-resistant bus bar including: a bus bar conductor part; a fire-resistant silicone covering including a cap part covering opposite ends of the bus bar conductor part, and a body covering part integrally coupled to the cap part while covering a body of the bus bar conductor part between the opposite ends, the fire-resistant silicone covering being ceramicized at high temperatures to support the bus bar conductor part; and a protective layer covering the fire-resistant silicone covering, in which a through-hole is formed in the cap part to extend from an upper surface of the cap part to a surface of the cap part in contact with the bus bar conductor part, and a battery pack comprising the fire-resistant bus bar.

## Description

### [Technical Field]

The present invention relates to a fire-resistant bus bar and a battery pack including the same.

More specifically, the present invention relates to a cap-integrated fire-resistant bus bar including a fire-resistant silicone covering, which includes a cap part and a body covering part integrally coupled to the cap part and is ceramicized at high temperatures, and a protective layer covering the fire-resistant silicone covering to maintain insulation and airtight characteristics even at high temperatures at which ignition occurs in a battery pack, and a battery pack including the same.

This application claims the benefit of priority based on Korean Patent Application No. 10-2023-0037684, filed on March 23, 2023, and the entire content of the Korean patent application is incorporated herein by reference.

### [Background Art]

A battery pack for use in electric vehicles, etc. has a structure in which a plurality of battery modules including a plurality of secondary batteries are connected in series or in parallel to obtain high power. The secondary batteries each include positive and negative current collectors, a separator, an active material, an electrolyte, etc. and thus can be repeatedly charged and discharged through an electrochemical reaction between these components.

A bus bar is used to electrically connect the battery modules. The bus bar is used to electrically connect terminal parts of adjacent battery modules or to connect battery modules to an external electric device.

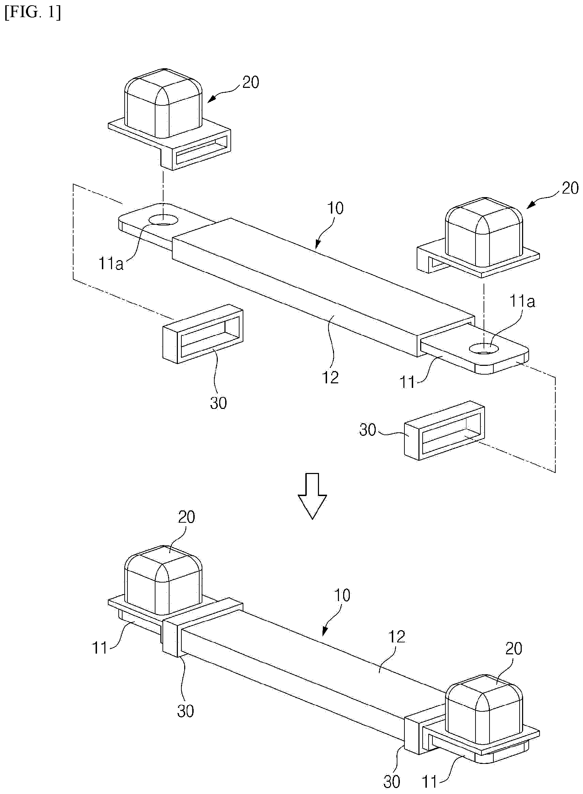

FIG. 1 is a schematic diagram illustrating an assembly structure of a bus bar and a cap of the related art.

As shown in FIG. 1, a bus bar 10 of the related art includes a bus bar conductor part 11 and a covering layer 12 surrounding the bus bar conductor part 11. The bus bar conductor part 11 is, for example, a high-purity copper conductor part such as C1100 or a conductor part formed of a metal such as aluminum. The covering layer 12 is formed of general silicone rubber or epoxy. In the related art, a cap 20 is attached to the covering layer 12 of the bus bar 10 using a wear-resistant tape 30 or the like. The cap 20 is formed separately to be freely opened or closed when the bus bar 10 is coupled to another electrical connection part by fastening a fastening member to fastening holes 11a in opposite ends of the bus bar 10.

However, the cap 20 is a soft rubber cap and thus is low in insulating properties and vulnerable to impact. In addition, an operation of connecting the bus bar 10 and the cap 20 using a tape is cumbersome and decreases productivity. Furthermore, the wear-resistant tape 30 has low fire-resistant performance and thus the bus bar 10 and the cap 20 may be separated from each other without being fixed to each other when the wear-resistant tape 30 melts at a high temperature.

In particular, when in a battery pack, inner components of the battery pack are electrically connected using the bus bar 10 of the related art, not only the rubber cap but also the covering layer 12 formed of silicone rubber or epoxy melt and the bus bar conductor part 11 is exposed to the outside due to very high temperature of flames (500 to 800 °C or 800 °C or higher, and 1000 °C or higher in a severe case), when the flames occur in the battery pack. In this case, the exposed bus bar conductor part comes into electrical contact with other metal parts in the battery pack, thus causing an electrical short circuit to occur, and the flames spread further due to heat generated due to the electrical short circuit.

To prevent thermal propagation, a bus bar including a covering layer formed of mica sheet, glass fiber, heat-resistant silicone (rubber) or the like may be taken into account.

However, in such a situation in which extremely high heat is generated, thermal propagation cannot be sufficiently prevented using the above-described materials. For example, a heat-resistant temperature of general heat-resistant silicone rubber is only in a range of 125 to 300 °C and thus a situation in which ignition occurs in a battery pack cannot be effectively coped with. In addition, the covering layer formed of mica sheet or glass fiber does not exhibit sufficient fire-resistance performance.

As described above, there have been recent demands to essentially design battery packs such that flames are prevented from leaking to the outside of the battery packs when ignition occurs in the battery packs.

In addition, there is a need to design a battery pack such that a bus bar conductor part can be thermally and electrically insulated from surroundings even at high temperatures when flames occur in the battery pack.

As described above, it is necessary to develop a technique for improving an insulation level and assemblability while securing fire resistance at high temperatures to maintain electrical insulation.

### [Related Art Literature]

### [Patent Document]

(Patent Document 1) Korean Patent Laid-Open Publication No. 2022-0001228

### [Disclosure]

### [Technical Problem]

The present invention is directed to providing a fire-resistant bus bar for maintaining thermal and electrical insulation as long as possible even when flames occur in a battery pack.

The present invention is also directed to providing a cap-integrated fire-resistant bus bar in which not only a body covering part of a bus bar conductor part but also a cap part covering opposite ends of the bus bar conductor part are integrally formed.

The present invention is also directed to providing a fire-resistant bus bar in which a cap part includes a through-hole which a fastening member may pass through.

The present invention is also directed to providing a battery pack including the fire-resistant bus bar.

### [Technical Solution]

According to an aspect of the present invention, a fire-resistant bus bar includes: a bus bar conductor part; a fire-resistant silicone covering including a cap part covering opposite ends of the bus bar conductor part, and a body covering part integrally coupled to the cap part while covering a body of the bus bar conductor part between the opposite ends, the fire-resistant silicone covering being ceramicized at high temperatures to support the bus bar conductor part; and a protective layer covering the fire-resistant silicone covering, in which a through-hole is formed in the cap part to extend from an upper surface of the cap part to a surface of the cap part in contact with the bus bar conductor part.

The fire-resistant silicone may be ceramicized at a temperature of 500 to 1700 °C.

The fire-resistant silicone may be ceramicized by sintering of a silicone resin containing a silicone compound represented by Chemical Formula 1 below and a metal oxide containing a silicon oxide.

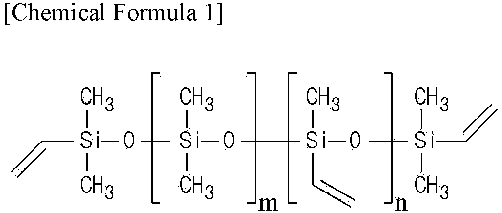

In Chemical Formula 1, m and n may be each an integer of 10 to 30.

The silicone resin and the metal oxide may be contained at a weight ratio of 1:0.5 to 1:1.5.

The metal oxide containing the silicon oxide may include at least one of pure silicon dioxide, silica, quartz, silica stone, tridymite, and keatite.

The protective layer may be a glass fiber layer or a mica layer.

A diameter of the through-hole may be less than a diameter of a head portion of a fastening member configured to be inserted into the through-hole to be coupled to the bus bar conductor part.

The through-hole may include a first hole with a diameter less than a diameter of a head portion of a fastening member configured to be coupled to the bus bar conductor part while passing through the through-hole, and a second hole with a diameter greater than the diameter of the head portion of the fastening member.

A cut slit may be provided in a perimeter of the through-hole of the cap part to be connected to the through-hole.

The cap part may inlcude a first cover part including the through-hole therein and configured to cover upper surfaces of the opposite ends, and a first extension cover part extending downward from the first cover part to cover side surfaces of the opposite ends, and the body covering part may inlcude a second cover part configured to cover an upper surface of the body and a second extension cover part extending downward from the second cover part to cover side surfaces of the body.

The fire-resistant bus bar may be a high-voltage bus bar for electrically connecting high-voltage terminal parts of a plurality of battery modules.

The bus bar conductor part msy be coated with the fire-resistant silicone covering by performing insert injection molding by injecting the fire-resistant silicone into a mold into which the bus bar conductor part is inserted.

Another aspect of the present invention provides a battery pack including a plurality of battery modules, a fire-resistant bus bar configured to electrically connect the plurality of battery modules, and a pack housing configured to accommodate the plurality of battery modules therein.

The pack housing may include a partition installed between the plurality of battery modules, and opposite ends of a bus bar conductor part of the fire-resistant bus bar may be electrically coupled to terminal parts of battery modules located at opposite sides of the partition, and a cap part of the fire-resistant bus bar may cover portions of the opposite ends and the terminal parts that are coupled to one another.

A bus bar installation through-hole or a bus bar installation groove may be provided in the partition, and the fire-resistant bus bar may be seated in the bus bar installation through-hole or the bus bar installation groove.

### [Advantageous Effects]

A fire-resistant bus bar of the present invention includes a fire-resistant silicone covering ceramicized to support a bus bar conductor part when flames occur in a pack instead of a covering layer burned in flames, thus maintaining insulation and airtight characteristics even at high temperatures.

**In** the fire-resistant bus bar of the present invention, a body covering part of the bus bar conductor part and a cap part covering opposite ends of the bus bar conductor part are integrally formed, thereby simplifying the manufacture of the bus bar and a cap and significantly improving the connection strength of the bus bar and the cap.

The cap part can be formed of fire-resistant silicone to further enhance insulation and fire-resistant airtight properties of the cap part.

Additionally, a through-hole through which a fastening member may pass can be formed in the cap part to minimize damage to the fire-resistant bus bar when the fire-resistant bus bar is fastened to another bus bar and facilitate the fastening of the fire-resistant bus bar to another bus bar or an electrical connection part.

The fire-resistant bus bar of the present invention may include a protective layer to cover the fire-resistant silicone covering, so that the protective layer may primarily function as a fire-resistant wall and simultaneously prevent the fire-resistant silicone covering from being directly exposed to flames, thereby maintaining overall shape and dimensions.

### [Brief Description of the Drawings]

FIG. 1 is a schematic diagram illustrating an assembly structure of a bus bar and a cap of the related art.
FIG. 2 is a perspective view of a fire-resistant bus bar according to an embodiment of the present invention.
FIG. 3 is a cross-sectional view of a fire-resistant bus bar in a longitudinal direction according to an embodiment of the present invention.
FIG. 4 is a cross-sectional view of a fire-resistant bus bar in a width direction according to an embodiment of the present invention.
FIG. 5 is a plan view of a fire-resistant bus bar according to an embodiment of the present invention.
FIG. 6 is a photograph of a glass fiber layer included in a fire-resistant bus bar of the present invention.
FIG. 7 is a side cross-sectional view of a fire-resistant bus bar according to another embodiment of the present invention.
FIG. 8 is a perspective view of a fire-resistant bus bar according to another embodiment of the present invention.
FIG. 9 is a plan view of a fire-resistant bus bar according to another embodiment of the present invention.
FIG. 10 is a schematic view of an example of a structure of a battery pack in which a fire-resistant bus bar of the present invention is installed.
FIG. 11 is a perspective view illustrating a process of installing a fire-resistant bus bar of the present invention in a battery pack.
FIG. 12 is a side cross-sectional view illustrating a state in which a fire-resistant bus bar of the present invention is installed in a battery pack.

### [Best Mode]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein. It should be, however, understood that the present invention is not limited to particular embodiments and include all modifications, equivalents, and alternatives falling within the idea and scope of the present invention.

### [Fire-resistant Bus Bar]

A fire-resistant bus bar of the present invention includes a bus bar conductor part, a fire-resistant silicone covering protecting the bus bar conductor part, and a protective layer covering the fire-resistant silicone covering.

The bus bar conductor part may be a general metal conductor part. That is, the bus bar conductor part may be formed of a high-purity tough pitch copper material with purity of 99.9% or more, e.g., C1100, or an aluminum material. That is, a material of the bus bar conductor part of the present invention is not particularly limited as long as it is a metal material available as a bus bar conductor for connecting electrical components. The opposite ends of the bus bar conductor part are electrically connected to corresponding electrical connection parts.

The fire-resistant silicone covering is ceramicized at high temperatures to support the bus bar conductor part. The fire-resistant silicone may be ceramicized at a temperature of 500 to 1700 °C. The fire-resistant silicone of the present invention with a fire-resistant temperature of 500 °C or higher is distinguished from a heat-resistant silicone with a heat-resistant temperature of less than 300 °C. The heat-resistant silicone is a silicone resin or rubber composition that is a material with flexibility and bendability that are characteristics of a silicone but is burned out or burned into ashes at a high temperature of 500 °C or higher. Therefore, there is a limit to applying the heat-resistant silicone to prevent a short circuit from occurring in a battery pack during heat propagation or prevent heat propagation.

The fire-resistant silicone covering is ceramicized, i.e., it exhibits "fire-resistant" performance, at a high temperature of 500 °C or higher, thus maintaining insulation and airtightness characteristics in the battery pack even when flames occur.

As described above, a fire-resistant bus bar according to the present invention exhibits high fire-resistant performance, because the fire-resistant bus bar includes a fire-resistant silicone and a structure thereof is improved.

The fire-resistant silicone is a composition containing a silicone resin and a metal oxide as main components and thus exhibits flexibility and bendability, which are characteristics of a silicon, at room temperature. **In** addition, the fire-resistant silicone has a certain level of elasticity and thus exhibits high impact resistance and insulation, and a silicone sintered body with a complex ceramic structure may be formed due to sintering of the silicone resin and the metal oxide when the fire-resistant silicone is exposed to a high temperature.

Specifically, the silicone resin contained in the fire-resistant silicone produces silica in powder form when burned at a high temperature. The produced silica reacts with the metal oxide contained in the fire-resistant silicone to form an "eutectic mixture" on an edge of the metal oxide, so that bridging may be performed between the silica and the metal oxide, thus causing the formation of a ceramic product that is cured at an ignition temperature and condensed when cooled. Such a ceramic body prevents a short-circuit or disconnection between conductors due to damage to the fire-resistant silicone covering even when external mechanical impact is applied or moisture penetrates in the case of a fire, thereby performing an electrical function of the bus bar.

To this end, the fire-resistant silicone according to the present invention includes a silicone resin and a metal oxide.

The silicone resin is not particularly limited as long as it is a resin containing silicon (Si) in a molecule but preferably contains a silicone compound represented by Chemical Formula 1 below (hereinafter referred to as the "silicone compound of Chemical Formula 1").

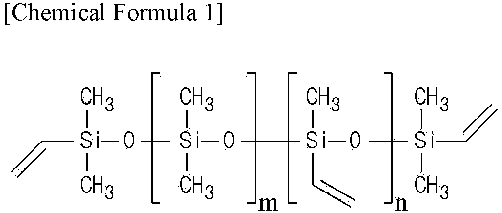

In Chemical Formula 1, m and n are each an integer of 10 to 30.

In Chemical Formula 1, the silicone compound includes a methylsiloxane repeating unit, and includes a vinyl group at the inside of and an end of the methylsiloxane repeating unit. The vinyl group is contained in the repeating unit as well as at the end of the silicone compound of Chemical Formula 1 to increase a degree of polymerization of the silicone resin when exposed to a high temperature, thereby implementing excellent fire-resistance characteristics compared to a silicone compound that does not contain the vinyl group.

In addition, the weight-average molecular weight of the silicone compound of Chemical Formula 1 may be adjusted to be in a specific range. The silicone compound of Chemical Formula 1 is a compound serving as a base of the silicone resin and thus may affect the physical properties of the fire-resistant silicone at room temperature and high temperatures according to the weight-average molecular weight of the silicone compound of Chemical Formula 1. For example, when the weight-average molecular weight of the silicone compound of Chemical Formula 1 is excessively high, the viscosity of the silicone resin increases and thus reactivity may decrease during high-temperature sintering, and when the weight-average molecular weight is extremely low, the elasticity and flexibility of the silicone resin at room temperature decrease, thus reducing the manufacturing processability, impact resistance, etc. of the fire-resistant bus bar. Therefore, the weight-average molecular weight of the silicone compound of Chemical Formula 1 according to the present invention may be adjusted to be in a range of 1,000 to 9,000 g/mol, and specifically, a range of 3,000 to 8,000 g/mol or a range of 5,000 to 7,000 g/mol.

In addition, the metal oxide is a composition containing silicon oxide and may function as a crystalline nucleus to form a high-density ceramic body together with the silicone resin described above when exposed to high temperatures.

The metal oxide may include at least one of silicon dioxide, silica, quartz, silica stone, tridymite, and keatite. The metal oxide may include pure silicon dioxide (SiO₂) and a mineral, e.g., quartz, which contains silicon dioxide (SiO₂) as a main component, is economically feasible, has a high melting point (high fire-resistance) and a high sintering degree, and may exhibit excellent electrical insulation performance. In particular, silicon dioxide, silica, quartz, etc. may contribute to improving various performances in a sintering process, cause fire-resistant silicone to be easily dissolved and molded, and reduce defects that may occur in ceramic bodies.

In addition, the metal oxide preferably has a crystal structure that increases fire resistance, insulation, mechanical strength, etc. when sintered together with a silicone resin. The metal oxide may be in the form of powder, and may have, but is not limited to, a size of 200 µm or less, for example, a size of 0.1 µm to 200 µm or a size of 0.1 µm to 100 µm.

The silicone resin may further contain a silicone compound represented by Chemical Formula 2 below (hereinafter referred to as the "silicone compound of Chemical Formula 2"), and the silicone compound of Chemical Formula 2 participates in the sintering of the metal oxide at a high temperature together with the silicone compound of Chemical Formula 1 to form a silicone sintered body.

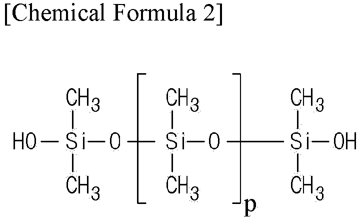

**In** Chemical Formula 2, p is an integer of 10 to 30.

The silicone compound of Chemical Formula 2 may increase the flexibility of the fire-resistant silicone at room temperature and induce the termination of the sintering of the silicone resin through dehydration condensation with the silicone compound of Chemical Formula 1 during sintering, thereby terminating the formation reaction of the ceramic body.

To this end, the silicone compound of Chemical Formula 2 may be used in an amount of less than 10 parts by weight, for example, 0.5 to 9 parts by weight, 1 to 6 parts by weight, or 2 to 5 parts by weight, based on 100 parts by weight of the fire-resistant silicone.

In addition, the fire-resistant silicone may contain a silicone resin and a metal oxide in a certain ratio to realize high elasticity at room temperature and form a ceramic body quickly when exposed to high temperatures.

Specifically, in the fire-resistant silicone, a weight ratio between the silicone resin and the metal oxide may be 1:0.5 to 1.5, and specifically, 1:0.8 to 1.2. When the weight ratio of the metal oxide is less than 0.5, it is difficult to obtain a ceramic structure having a high-density crystal structure at high temperatures and thus sufficient fire resistance and mechanical strength are not achieved. When the weight ratio of the metal oxide exceeds 1.5, the flexibility of the fire-resistant silicone decreases at room temperature and thus the fire-resistant silicone is difficult to be processed.

For example, the fire-resistant silicone of the present invention may contain a 35 to 50% by weight silicone compound of Chemical Formula 1, 16 to 32% by weight quartz, 10 to 27% by weight silicon dioxide, and 1 to 6% by weight silicone compound of Chemical Formula 2, and may further contain a certain solvent to increase processability during the manufacture of the fire-resistant silicone in some cases.

As described above, the fire-resistant silicone of the present invention is cured and ceramicized by sintering the silicone resin and the metal oxide at 500 °C or higher. The fire-resistant silicone may be ceramicized at temperatures of up to 1700 °C and theoretically can be kept partially ceramicized even at temperatures above 1700 °C. However, at a temperature above 1700 °C, a time period during which the fire-resistant silicone is kept ceramicized may decrease, thus causing a failure of the maintenance of fire-resistance performance required inside a battery pack.

As described above, the fire-resistant silicone has the same properties as rubber having bendability, flexibility, and elasticity before being ceramicized. Therefore, the fire-resistant silicone covering is easily injection-molded or applied to the bus bar conductor part as described below.

The fire-resistant silicone covering is flexible before being ceramicized and thus may flexibly follow deformation of the bus bar conductor part. Therefore, when the fire-resistant bus bar of the present invention is installed in the battery pack, it is possible to easily respond to even a slight assembly tolerance, thus improving assemblability. For example, when a battery module is fastened to the battery pack by bolting, the fire-resistant silicone covering may absorb the movement or slight distortion of a bus bar conductor part coupled to the battery module. In addition, even when the battery pack vibrates due to the vibration of an electric vehicle, the fire-resistant silicone covering may naturally absorb the vibration.

In particular, the fire-resistant bus bar of the present invention is characterized in that the fire-resistant silicone covering includes not only a body covering part surrounding the body of the bus bar conductor part but also a cap part covering opposite ends of the bus bar conductor part. The cap part is integrally coupled to the body covering part and thus it is not necessary to connect the cap part to the bus bar or a covering part covering the body of the bus bar using a separate tape, unlike in the related art. Therefore, the strength of connection between the cap part and the body covering part further improves. The fire-resistant bus bar may be manufactured by integrally molding the cap part and the body covering part, thereby simplifying a manufacturing process. In addition, the cap part is formed of fire-resistant silicone and thus can be ceramicized at high temperatures to protect the bus bar conductor part and an electrical connection part thereof together, thereby greatly enhancing insulation performance and airtightness.

Meanwhile, when the fire-resistant silicone is ceramicized at a high temperature, the fire-resistant silicone is thermally and electrically insulated but the mechanical strength thereof decreases slightly and thus the fire-resistant silicone is likely to be broken by an external force. According to the present invention, a protective layer is provided to cover the fire-resistant silicone covering to structurally improve the rigidity of the fire-resistant silicone covering.

The protective layer is a layer covering the outside of the fire-resistant silicone covering to prevent the fire-resistant silicone covering from being directly exposed to flames. That is, the protective layer primarily functions as a fire-resistant wall. In addition, when the fire-resistant silicone covering is ceramicized, the protective layer covers the ceramicized covering to maintain an overall shape and dimensions of the ceramicized covering.

A material of the protective layer may be, for example, glass fiber or mica material with insulating and heat resistance properties. For example, the fire-resistant silicone covering may be prevented from being exposed to the outside by winding a glass fiber tape or mica tape around the fire-resistant silicone covering. However, the protective layer is not limited thereto and may be formed of a different material with excellent insulation or heat-resistance properties.

A shape of the fire-resistant bus bar will be described in detail with respect to the following embodiments.

### (First Embodiment)

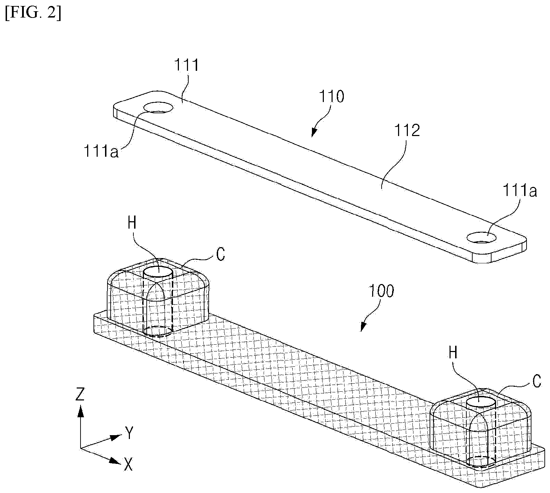

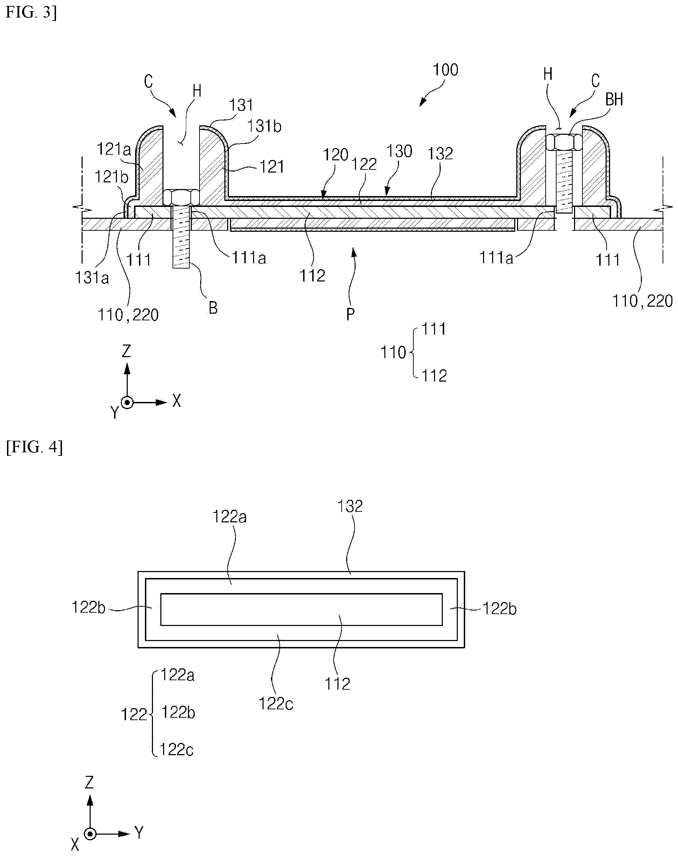

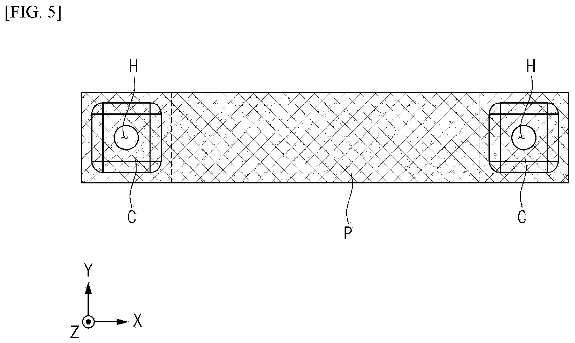

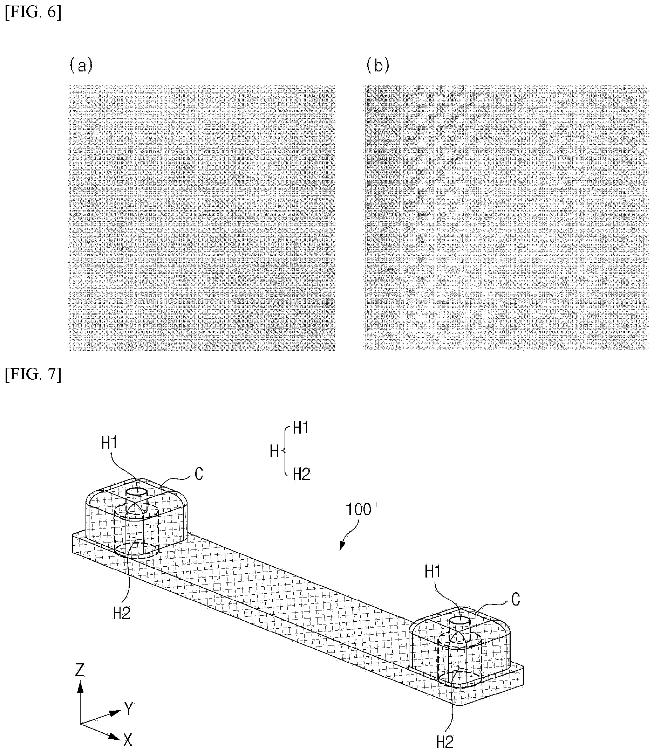

FIG. 2 is a perspective view of a fire-resistant bus bar according to an embodiment of the present invention. FIG. 3 is a cross-sectional view of a fire-resistant bus bar in a longitudinal direction according to an embodiment of the present invention. FIG. 4 is a cross-sectional view of a fire-resistant bus bar in a width direction according to an embodiment of the present invention. FIG. 5 is a plan view of a fire-resistant bus bar according to an embodiment of the present invention. FIG. 6 is a photograph of a glass fiber layer included in a fire-resistant bus bar of the present invention.

In the following drawings, an "X-axis direction" may be understood to mean a longitudinal direction of a fire-resistant bus bar 100, a "Y-axis direction" may be understood to mean a width direction of the fire-resistant bus bar 100, and a "Z-axis direction" may be understood to mean a height direction of the fire-resistant bus bar 100.

As shown in FIGS. 2 and 3, the fire-resistant bus bar 100 includes a bus bar conductor part 110 and a protective covering that protects the bus bar conductor part 110 from contaminants (dirt, dust, etc.) or flames.

As shown in FIGS. 2 and 3, the bus bar conductor part 110 is located at an innermost side of the fire-resistant bus bar 100. Opposite ends 111 of the bus bar conductor part 110 may be provided with fastening holes 111a for coupling to a corresponding electrical connection part (e.g., a bus bar conductor part 110 of another fire-resistant bus bar or terminal parts 210 and 220 of a battery module) through a fastening member B.

The protective covering includes caps C at the opposite ends 111 of the bus bar conductor part 110 and a central covering part P on a body 112 of the bus bar conductor part 110 between the opposite ends 111. The caps C are integrally coupled to the central covering part P. The protective covering may include a fire-resistant silicone covering 120 covering at least an upper surface of the bus bar conductor part 110 and a protective layer 130 covering the fire-resistant silicone covering 120.

The fire-resistant silicone covering 120 includes a cap part 121 covering the opposite ends 111 of the bus bar conductor part 110, and a body covering part 122 covering the body 112 of the bus bar conductor part 110 between the opposite ends 111.

The caps C of the protective covering may be formed only using the cap part 121. Alternatively, the caps C of the protective covering may be formed by covering the cap part 121 with a cap protective layer 131 of a protective layer to be described below. The central covering part P may be formed of only the body covering part 122 or formed by covering the body covering part 122 with the body protective layer 132 of the protective layer to be described below.

The cap part 121 includes a through-hole H extending from an upper surface of the cap part 121 to a surface thereof that is in contact with the bus bar conductor part 110.

The through-hole H is provided at a position corresponding to a fastening hole 111a of the bus bar conductor part 110. Therefore, it is not necessary to expose the fastening hole 111a by folding the cap part 121 or the caps C to install the fastening member B in the fastening hole 111a during fastening of the fire-resistant bus bar 100 with an electrical connection part of another electrical device. That is, the fastening member B may be installed in the fastening hole 111a by inserting the fastening member B into the through-hole H and moving the fastening member B ahead along the through-hole H. In this case, the fastening member B may pass through the fastening hole 111a and protrude to a back surface of the bus bar conductor part 110 to be connected to the electrical connection part of the other electrical device. As described above, the fire-resistant bus bar 100 and another electrical connection part may be conveniently connected through the through-hole H. Furthermore, there is no need to perform additional deformation (e.g., folding) of the cap part 121 or the caps C to expose the fastening hole 111a, thus minimizing damage to the fire-resistant bus bar 100 when the fire-resistant bus bar 100 is connected to another electrical connection part. In addition, a folding line may be prevented from occurring at an interface between the caps C and the central covering part P due to the additional deformation. Therefore, the structural rigidity of the fire-resistant bus bar 100 may be improved.

The fastening member B may be interference fitted into the through-hole H. To this end, a diameter of the through-hole H may be less than a diameter of a head part BH of the fastening member B inserted into the through-hole H to be coupled to the bus bar conductor part 110.

The fire-resistant bus bar 100 may be transported while the fastening member B is inserted into the through-hole H. In this case, a length of the through-hole H in a height direction Z may be equal to or greater than a length of the fastening member B in the height direction Z, so that the fastening member B may not be exposed while protruding to the outside of the fire-resistant bus bar 100. As described above, the fastening member B is located inside the through-hole H, and thus, an exposed end of the fastening member B may be accommodated in the through-hole H when the fastening member B passes through the fastening hole 111a of the fire-resistant bus bar 100 and is coupled to a corresponding electrical connection part (e.g., a bus bar conductor part 110 of another fire-resistant bus bar or the terminal parts 210 and 220 of the battery module). Accordingly, the fastening member B may be protected by the cap part 121 to prevent a short circuit due to contact with other external components. The fastening member B may be a general bolt to be used for connection of bus bars.

The cap part 121 may include the through-hole H, a first cover part 121a covering an upper surface of the opposite ends 111 of the bus bar conductor part, and a first extension cover part 121b extending downward from the first cover part 121a to cover side surfaces of the opposite ends 111. As described above, the cap part 121 may cover the upper and side surfaces of the opposite ends 111 to protect the opposite ends 111 of the bus bar conductor part 110 from pollutants or flames. A lower surface of the bus bar conductor part 110 may be exposed to be in contact with another electrical connection part.

As shown in FIG. 3, the body covering part 122 may extend between the cap parts 121 in the longitudinal direction X of the bus bar conductor part 100.

The body covering part 122 may have a shape corresponding to the shape of the body 112 of the bus bar conductor part 110.

As shown in FIG. 4, the body covering part 122 may include a second cover part 122a covering an upper surface of the body 112 and a second extension cover part 122b extending downward from the second cover part 122a to cover a side surface of the body 112. The body covering part 122 may further include a third cover part 122c covering a lower surface of the body 112 and connected to the second extension cover part 122b. As described above, the body covering part 122 may cover the entire body 112 to protect the body 112 of the bus bar conductor part 110 from foreign materials or flames.

The cap part 121 and the body covering part 122 of the fire-resistant silicone covering 120 are integrally molded. For example, the fire-resistant silicone covering 120 may be molded by injecting a fire-resistant silicone into a mold (not shown) with shapes of the cap part 121 and the body covering part 122 of the fire-resistant silicone covering 120. As described above, the fire-resistant silicone may be, for example, a mixture of a silicone resin and a metal oxide and be included in a certain solvent in the form of a coating solution or slurry with fluidity. The fire-resistant silicone covering 120 may be molded separately from the bus bar conductor part 110 by injecting a fire-resistant silicone coating solution or slurry into the mold. The fire-resistant silicone covering 120 of the present invention may be obtained by removing the mold after drying and curing processes are performed.

In this case, the body of the bus bar conductor part 110 may be covered with the body covering part 122 by inserting the bus bar conductor part 110 into the body covering part 122 of the molded fire-resistant silicone covering 120 in the longitudinal direction. In this case, the cap part 121 of the molded fire-resistant silicone covering 120 is provided on the opposite ends 111 of the bus bar conductor part 110 to cover the opposite ends 111.

As described above, the fire-resistant silicone covering 120 may be molded separately from the bus bar conductor part 110 and coupled to the bus bar conductor part 110 but the molding of the fire-resistant silicone covering 120 and the coating of the bus bar conductor part 110 with the fire-resistant silicone covering 120 may be performed simultaneously by so-called insert injection molding. When the latter method is used, a manufacturing process may further be simplified, thus increasing productivity.

That is, the bus bar conductor part 110 is inserted, and the fire-resistant silicone coating solution or slurry is injected into an insert-injection molding mold (not shown) having the shape of the fire-resistant silicon covering 120 along the perimeter of the bus bar conductor part 110. **In** this case, the fire-resistant silicone covering 120 with the above-described shape is formed as the inside of the mold is filled with the fire-resistant silicone while the bus bar conductor part 110 is covered with the fire-resistant silicone. The fire-resistant silicone covering 120 including the bus bar conductor part 110 therein as shown in FIG. 3 may be obtained by removing the mold after drying and curing processes are performed.

As shown in FIGS. 3 and 4, the protective layer 130 is provided on the fire-resistant silicone covering 120. For example, the fire-resistant bus bar 100 of the present invention may be obtained by winding a tape of the protective layer 130, such as a glass fiber tape or a mica tape, around the fire-resistant silicone covering 120. **In** the drawings of the present specification, the protective layer 130 exposed to the outside is displayed in a shape of a lattice type mesh.

The protective layer 130 includes a cap protective layer 131 covering the cap part 121 and a body protective layer 132 covering the body covering part 122.

A shape of the protective layer 130 may match the shape of the fire-resistant silicone covering 120. For example, the cap protective layer 131 may include a first protective layer 131a covering an outer surface of the first cover part 121a and a first side protective layer 131b covering an outer surface of the first extension cover part 121b. In addition, the body protective layer 132 may cover the entire outer surface of the body covering part 122 so that the body covering part 122 may not be exposed to the outside.

As shown in FIG. 3, the first protective layer 131a may cover only a peripheral part of the through-hole H to maintain an open state of the through-hole H. In this case, it is possible to reduce total weight of the fire-resistant bus bar 100 while saving materials to be consumed to manufacture the protective layer 130. In addition, when the fire-resistant bus bar 100 is seated on an installation location, it is possible to easily connect the fire-resistant bus bar 100 to another electrical connection part through the open through-hole H.

As the protective layer 130, for example, a glass fiber or a mica material having both insulation and heat resistance may be employed. For example, the fire-resistant silicone covering 120 may be prevented from being exposed to the outside by winding a glass fiber tape or mica tape around an outer side of the fire-resistant silicone covering 120. FIG. 6 shows a photograph of a glass fiber layer.

A glass fiber is an inorganic fibrous material mainly composed of a silicate. The glass fiber may be in the form of glass fiber fabric (see (a) of FIG. 6) obtained by weaving yarn formed by twisting and winding glass fiber strands or in the form of nonwoven fabric (see (b) of FIG. 6). The fire-resistant bus bar 100 of the present invention may be manufactured by applying an adhesive to the glass fiber fabric or nonwoven fabric and attaching the glass fiber fabric or nonwoven fabric to the above-described fire-resistant silicone covering 120. Glass fiber has fire-resistant properties and high electrical insulation.

Mica is one of silicate minerals, has a layered structure, generally has a hexagonal crystal shape, and is used as an electrical insulating material or an insulating material. Mica exhibits better fire resistance than the glass fiber. Therefore, mica is more preferable as a protective layer protecting the fire-resistant silicone covering. However, the protective layer is not limited thereto and may be formed of a different material with excellent insulation or heat-resistance properties.

For example, the protective layer 130 may be formed by winding a tape of the protective layer 130 processed in the form of the tape around the fire-resistant silicone covering 120. However, a method of forming the protective layer 130 is not limited thereto. For example, the protective layer 130 may be formed on the fire-resistant silicon covering 120 by coating, applying, spraying or other known methods.

### (Second Embodiment)

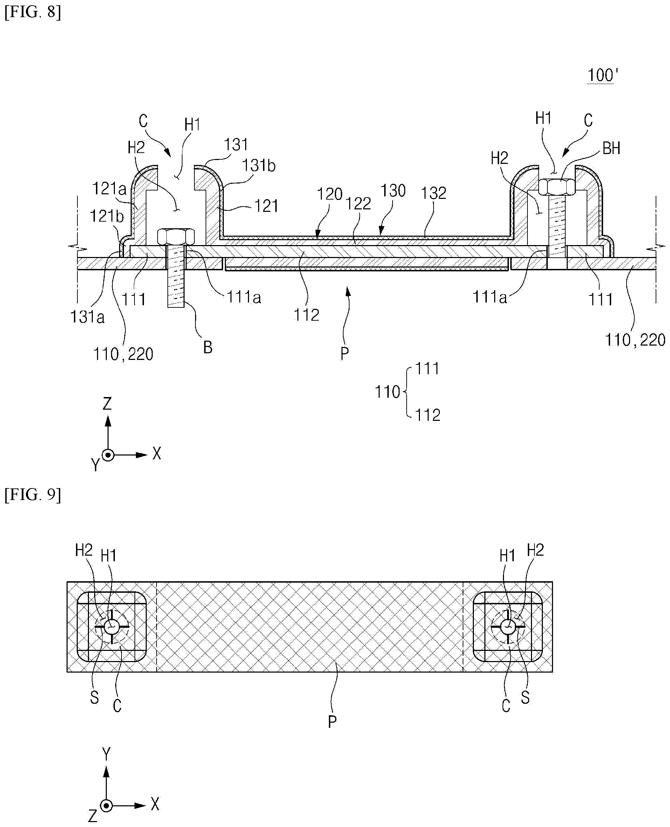

FIG. 7 is a side cross-sectional view of a fire-resistant bus bar according to another embodiment of the present invention. FIG. 8 is a perspective view of a fire-resistant bus bar according to another embodiment of the present invention. FIG. 9 is a plan view of a fire-resistant bus bar according to another embodiment of the present invention.

A fire-resistant bus bar 100' of the present embodiment is different from the fire-resistant bus bar 100 of the first embodiment in that a through-hole H includes a first hole H1 and a second hole H2 with different diameters. In addition, components of the fire-resistant bus bar 100' that are the same as those of the fire-resistant bus bar 100 of the first embodiment may also apply to the present embodiment and thus a detailed description thereof is omitted here.

Similar to the through-hole H of the first embodiment, the first hole H1 is provided at a position corresponding to the fastening hole 111a of the bus bar conductor part 110. Therefore, the fastening member B may be disposed at an installation position simply by inserting the fastening member B into the first hole H1. A diameter of the first hole H1 may be smaller than that of the head part BH of the fastening member B to interference fit the fastening member B into the first hole H1. In this case, the fastening member B may be transferred while being inserted into the first hole H1.

A length of the first hole H1 in the height direction Z may be greater than a length of the head part BH of the fastening member B in the height direction Z.

The second hole H2 may be located under the first hole H1 while being connected to the first hole H1 . The second hole H2 has a diameter larger than the diameter of the head portion BH of the fastening member B. That is, as shown in FIGS. 7 to 9, the second hole H2 has a diameter larger than the diameter of the first hole H1. Therefore, when the head part BH of the fastening member B passes through the first hole H1, resistance due to interference fitting between the head part BH of the fastening member B and an inner wall of the first hole H1 disappears. As described above, when the head part BH of the fastening member B enters the second hole H2, resistance applied to the fastening member B is minimized, so that fastening torque of the fastening member B may be constantly managed. Fastening quality of each component may be uniformly maintained by providing the second hole H2 whose diameter is larger than that of the first hole H1. In addition, it is possible to reduce the amount of materials to be used for the manufacture of the fire-resistant bus bar 100' and reduce the mass of the fire-resistant bus bar 100' as much as a space occupied by the second hole H2.

A total height of the first hole H1 and the second hole H2 in the height direction Z may correspond to or be greater than the length of the fastening member B in the height direction Z. Therefore, when the fire-resistant bus bar 100' is transferred while the head part BH of the fastening member B is inserted into the first hole H1, the fastening member B is not exposed to the outside of the fire-resistant bus bar 100'. In this case, a length of each of the first hole H1 and the second hole H2 in the height direction Z may be appropriately selected in consideration of the length of the head part BH of the fastening member, a total length of the fastening member B, the mass of the fire-resistant bus bar 100', etc.

As shown in FIG. 9, a cut slit S connected to the through-hole H may be provided in the perimeter of the through-hole H of the cap part 121. Therefore, when the fastening member B is inserted into the first hole H1or the through-hole H, the cut slit S opens, thus facilitating elastic deformation of the periphery of the through-hole H of the cap part 121. Accordingly, the fastening member B may be easily inserted into the first hole H1 or the through-hole H and structural resistance of the periphery of the through-hole H that may occur during a fastening operation may be reduced, thus minimizing damage to the periphery of the through-hole H of the cap part 121 and the head part BH of the fastening member B.

### (Battery Pack)

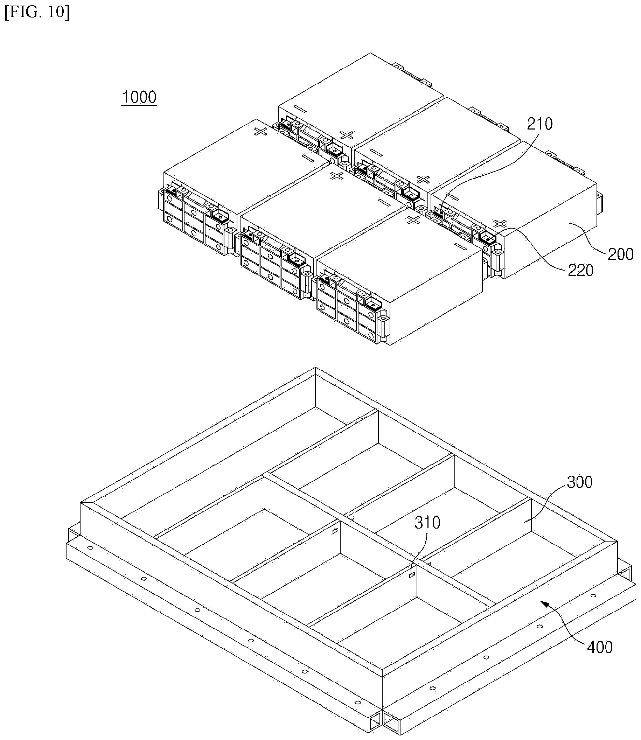

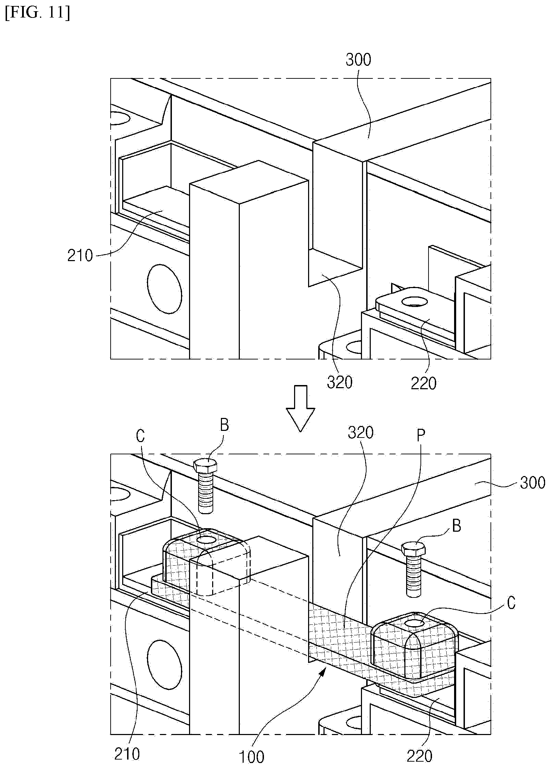

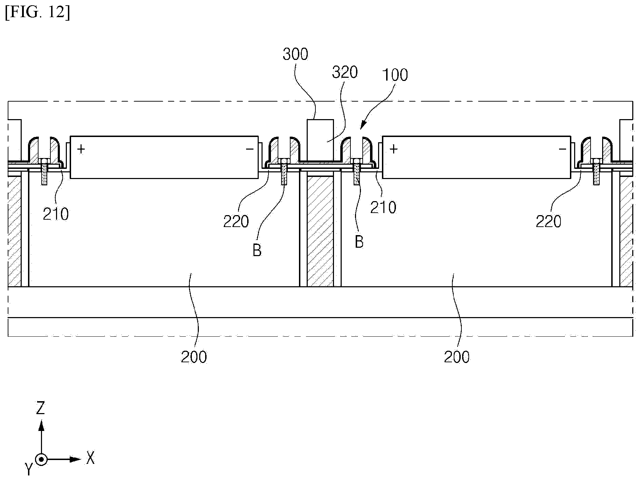

FIG. 10 is a schematic view of an example of a structure of a battery pack in which a fire-resistant bus bar of the present invention is installed. FIG. 11 is a perspective view illustrating a process of installing a fire-resistant bus bar of the present invention in a battery pack. FIG. 12 is a side cross-sectional view illustrating a state in which a fire-resistant bus bar of the present invention is installed in a battery pack.

The fire-resistant bus bars 100 and 100' of the present invention described above each include the fire-resistant silicone covering 120 ceramicized at high temperatures and the protective layer 130 covering the fire-resistant silicone covering 120 to maintain a shape thereof. Therefore, the safety of a battery pack can be greatly improved by applying the fire-resistant bus bar 100 or 100' to the battery pack in which ignition may occur.

The fire-resistant bus bar 100 or 100' may be used to electrically connect, for example, a plurality of battery modules 200 in a battery pack. In this case, the fire-resistant bus bar 100 or 100' may electrically connect terminal parts 210 and 220 of adjacent battery modules 200. Alternatively, the fire-resistant bus bar 100 or 100' may be used to connect battery modules to an external electrical device.

Particularly, high-voltage terminal parts 210 and 220 of battery modules generate relatively high heat due to a high current. Accordingly, higher heat may be concentrated on the high-voltage terminal parts 210 and 220 when flames occur in the pack. Therefore, the fire-resistant bus bars 100 and 100' of the present invention are applicable as high-voltage bus bars for electrically connecting high-voltage terminal parts of a plurality of battery modules.

A battery pack 1000 of the present invention may include a plurality of battery modules 200, fire-resistant bus bars 100 and 100' electrically connecting the battery modules 200, and a pack housing 400 for accommodating the battery modules 200.

FIG. 10 illustrates that the plurality of battery modules 200 are accommodated in the pack housing 400. The battery modules 200 each include a cell stack (not shown) in which a plurality of battery cells are stacked, and cell leads (or terminals) with different polarities are drawn out from the battery cells of the cell stack. **In** this case, the types of the battery cells are not particularly limited. That is, prismatic, cylindrical, or pouch type battery cells may be accommodated in the battery modules 200.

The cell leads are electrically connected to a bus bar such as a terminal bus bar or an inter-bus bar. The fire-resistant bus bar 100 or 100' of the present invention may be used to electrically connect the plurality of battery modules 200.

Meanwhile, FIG. 10 illustrate a general battery module 200 in which a module housing entirely surrounds upper, lower, left, and right sides of a battery cell stack. However, the present invention is not limited thereto, and a fire-resistant bus bar of the present invention is also applicable to a battery module with a moduleless type module housing in which, e.g., at least one of upper, lower, left and right sides of a cell stack is open or a battery cell block in which all of upper, lower, left and right sides of a cell stack are open. As described above, a battery pack with a so-called cell-to-pack structure may be configured by installing therein cell blocks or battery modules, in which part of or an entire module housing is omitted. The fire-resistant bus bar 100 or 100' of the present invention may be used for electrical connection of cell blocks or moduleless type battery modules installed in such a battery pack having the cell-to-pack structure.

The pack housing may further include a partition 300 installed between battery modules. The partition 300 may be installed on a bottom plate of the pack housing while extending in a longitudinal or width direction of the pack housing. As described above, the structural rigidity of the pack housing may be improved by installing the partition 300 in the pack housing. To this end, the partition 300 may be formed of a metal material.

A height of the partition 300 may less than a height of the battery module 200. More specifically, the height of the partition 300 may be less than a height at which the terminal parts 210 and 220 of the battery module 200 are located in the battery module 200. In this case, the fire-resistant bus bar 100 connected to the terminal parts 210 and 220 of the adjacent battery module is seated on or spaced apart from an upper surface of the partition 300. As described above, when the height of the partition 300 is less than the height of the battery modules 200, opposite ends of a bus bar conductor part of the fire-resistant bus bar may be easily electrically connected to terminal parts of battery modules 200 on opposite sides of the partition 300.

Alternatively, as shown in FIGS. 10 to 12, the height of the partition 300 may be set to correspond to or to be greater than the height of the battery modules 200. In this case, adjacent battery modules 200 may be isolated from each other. Therefore, even when a fire occurs in a certain battery module 200, it is possible to delay or prevent flames from propagating toward adjacent battery modules 200.

In this case, a bus bar installation through-hole 310 or a bus bar installation groove 320 may be provided in the partition 300. FIG. 10 illustrates that the bus bar installation through-hole 310 is provided in the partition 300. FIG. 11 illustrates that the bus bar installation groove 320 is provided in the partition 300. In terms of flame prevention and airtightness, a partition is preferably provided with the bus bar installation through-hole 310 as shown in FIG. 10. An upper part of the bus bar installation groove 320 of FIG. 11 is open, thus facilitating installation and electrical connection of bus bars.

The fire-resistant bus bars 100 and 100' may be seated in the bus bar installation through-hole 310 or the bus bar installation groove 320. In this case, opposite ends 111 of a bus bar conductor part of the fire-resistant bus bar are electrically coupled to the terminal parts 210 and 220 of the battery modules 200 at opposite sides of the partition 300.

FIGS. 11 and 12 illustrate electrical connection of the battery modules 200 through the fire-resistant bus bar 100 in the battery pack 1000. The partition 300 is positioned between the adjacent battery modules 200. The bus bar installation groove 320 may be provided in the partition 300. The fire-resistant bus bar 100 of the present invention is seated in the bus bar installation groove 320. The fire-resistant bus bar 100 is formed in a shape corresponding to that of the bus bar installation groove 320. Therefore, the fire-resistant bus bar 100 of the present invention may be airtightly brought into surface contact with the partition 300. Accordingly, the battery modules 200 arranged adjacent to each other may be more airtightly isolated from each other, and flame propagation between the battery modules 200 may be prevented more effectively.

A cap C integrally formed with the fire-resistant bus bar 100 covers portions of the opposite ends 111 and the terminal parts 210 and 220 that are coupled to each other. Therefore, it is possible to install a fire-resistant bus bar simultaneously with the coupling of a cap thereto without having to additionally couple the cap to the bus bar unlike in the related art. In addition, it is possible to easily connect the fire-resistant bus bar 100 and the terminal parts 210 and 220 through a through-hole H in the cap C.

Meanwhile, in the fire-resistant bus bar 100 of the present invention, a body covering part 122 and a cap part 121 that cover the bus bar conductor part 110 are simultaneously ceramicized to form a dense sintered body when flames occur in the battery pack 1000. That is, at a high temperature of 500 °C or higher, the body covering part 122 and the cap part 121 are ceramicized and thus the shapes thereof are maintained, unlike conventional heat-resistant silicone that is burned away or burned into ashes. Accordingly, the fire-resistant silicone covering 120 stably supports the bus bar conductor 110 even when a flame occurs. In addition, the protective layer 130 prevents the fire-resistant silicone covering 120 from being in direct contact with flames, thus preventing the deformation of fire-resistant silicone and further enhancing insulation and fire resistance.

### [Embodiments of the Present Invention]

### [Experimental Examples]

### (Experimental Example 1)

A fire-resistant silicone containing a 50 parts by weight silicone compound of Chemical Formula 1 above, 20 parts by weight quartz, and 30 parts by weight pure silicon dioxide was applied to a certain thickness to a copper bus bar conductor part of a bus bar with a cross-sectional area selected from a cross-sectional area that is in a range of 0.5 to 3 mm², excluding opposite ends thereof. A glass fiber tape (product name: AGT6WO, manufactured by SWECO) with a thickness of 0.18 mm was wound twice around the fire-resistant silicone coated bus bar to prepare a fire-resistant silicone coated bus bar of Example 1.

A mica tape (product name: SA765, manufactured by SWECO) with a thickness of 0.18 mm was wound twice around the fire-resistant silicone coated bus bar to prepare a fire-resistant silicone coated bus bar of Example 2.

A bus bar of Comparative Example 1 was prepared by setting a length of a bus bar conductor part and lengths of exposed portions of opposite ends of the bus bar conductor part to be the same as those of Examples 1 and 2 and winding a glass fiber tape of AGT6WO around a central portion of the bus bar conductor part. A thickness of a covering of the wound glass fiber tape was set to be substantially the same as that of Example 1.

A bus bar of Comparative Example 2 was prepared by winding a mica tape of SA765 once around a central region of a bus bar conductor part and winding the glass fiber tape of Comparative Example 1 once around the mica tape. A length of the bus bar conductor part and lengths of exposed portions of opposite ends thereof were the same as those of Examples 1 and 2 and Comparative Example 1.

To test insulation properties (insulation maintenance performance) when a fire occurs, a copper wire was wound around a covering part (a coated portion or a tape-wound part) of each of the bus bars of Examples 1 and 2 and Comparative Examples 1 and 2 the same number of turns, one end of an outermost copper wire of the covering part was connected to a negative electrode terminal of a withstand voltage tester, and one end of each of the bus bar conductor parts was connected to a positive electrode terminal of the withstand voltage tester. All surfaces of the bus bars were uniformly heated by a large torch with a flame temperature of 1100 to 1150 °C while a voltage of 1000 V was applied to the bus bars by the withstand voltage tester.

An insulation failure time during which an insulation state is destroyed, i.e., a short circuit occurs, was measured under the above-described voltage and heating temperature conditions, and measurement results are shown in Table 1 below.

**[Table 1]**

| Experimental Example 1 | Configuration of Bus Bar | Insulation Fail Time |
|---|---|---|
| Comparative Example 1 | copper bus bar conductor part+glass fiber tape | 1 minute and 35 seconds |
| Comparative Example 2 | copper bus bar conductor part+mica tape+glass fiber tape | 10 minute and 30 seconds |
| Example 1 | copper bus bar conductor part+fire-resistant silicone covering+glass fiber tape | 14 minutes |
| Example 2 | copper bus bar conductor part+fire-resistant silicone covering+mica tape | 15 minutes and 30 seconds |

As shown in Table 1 above, the bus bars with the fire-resistant silicone covering and a protective layer according to the present invention had longest insulation failure times, and showed a significant difference in terms of the insulation failure times from Comparative Examples 1 and 2. Therefore, it can be seen that insulation characteristics of the fire-resistant bus bars with the fire-resistant silicone covering and the protective layer according to the present invention are excellent. In particular, the insulation performance of Example 2 in which the mica tape was used as the protective layer is better than those of the examples in which the glass fiber tape was used as the protective layer.

### (Experimental Example 2)

Fire-resistant silicones with compositions shown in Table 2 below were prepared while changing a weight ratio between the silicone compound of Chemical Formula 1 and a metal oxide.

Each of fire-resistant silicones of Examples 1-1 to 1-5 was applied to a certain thickness on a copper bus bar conductor part under the same conditions as in Experimental Example 1, a glass fiber tape of AGT6WO was wound therearound, copper wire was wound around a bus bar covering layer under the same conditions as in Experimental Example 1, and a withstand voltage tester was connected thereto.

In addition, heating was performed by a large torch under the same conditions as in Experimental Example 1 while a voltage was applied, and insulation fail times were measured. Measurement results are shown in Table 2 below.

**[Table 2]**

| Experimental Example 2 | Composition of fire-resistant silicone covering layer | Insulation Fail Time |
|---|---|---|
| Example 1-1 | 50 parts by weight silicone compound: 50 parts by weight metal oxide (quartz: 20 parts by weight, pure silicon dioxide: 30 parts by weight) | 14 minutes |
| Example 1-2 | 50 parts by weight silicone compound: 25 parts by weight metal oxide (quartz: 10 parts by weight, pure silicon dioxide: 15 parts | 12 minutes and 50 seconds |
| | by weight) | |
| Example 1-3 | 50 parts by weight silicone compound: 75 parts by weight metal oxide (quartz: 30 parts by weight, pure silicon dioxide: 45 parts by weight) | 16 minutes |
| Example 1-4 | 50 parts by weight silicone compound: 20 parts by weight metal oxide (quartz: 10 parts by weight, pure silicon dioxide: 10 parts by weight) | 12 minutes |
| Example 1-5 | 50 parts by weight silicone compound: metal oxide 80 parts by weight (quartz: 35 parts by weight, pure silicon dioxide: 45 parts by weight) | 16 minutes and 40 seconds |

In Examples 1-1 to 1-5 above, weight ratios between the silicon compounds and the metal oxides were 1:1, 1:0.5, 1:1.5, 1:0.4, and 1:1.6. The insulation fail times of all the examples 1-1 to 1-5 were far longer than those of Comparative Examples 1 and 2. However, in the case of Example 1-4 in which the weight ratio was less than 1:0.5, the insulation failure time was slightly short, because it is considered that the amount of a ceramic structure having a high-density crystal structure at high temperatures was slightly insufficient due to an insufficient amount of the metal oxides. In the case of Example 1-5 in which the weight ratio was 1:1.6, the insulation failure time was sufficiently long but the amount of the metal oxide was excessively large, and thus, the flexibility of the fire-resistant silicone decreased at room temperature, making it difficult to coat the bus bar conductor with the fire-resistant silicone.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

### (Reference Numerals)

100, 100': fire-resistant bus bar
P: central covering part
C: cap
110: bus bar conductor part
111: opposite ends
120: fire-resistant silicone covering
121: cap part
H: through-hole
122: body covering part
130: protective layer
131: cap protective layer
132: body protective layer
B: fastening member
200: battery module
210, 220: terminal part
300: partition
310: bus bar installation through-hole
320: bus bar installation groove
400: pack housing
1000: battery pack

## Claims

1. A fire-resistant bus bar comprising:
a bus bar conductor part;
a fire-resistant silicone covering comprising: a cap part covering opposite ends of the bus bar conductor part; and a body covering part integrally coupled to the cap part while covering a body of the bus bar conductor part between the opposite ends, the fire-resistant silicone covering being ceramicized at high temperatures to support the bus bar conductor part; and
a protective layer covering the fire-resistant silicone covering,
wherein a through-hole is formed in the cap part to extend from an upper surface of the cap part to a surface of the cap part in contact with the bus bar conductor part.

2. The fire-resistant bus bar of claim 1, wherein the fire-resistant silicone is ceramicized at a temperature of 500 to 1700 °C.

3. The fire-resistant bus bar of claim 1, wherein the fire-resistant silicone is ceramicized by sintering a metal oxide containing a silicon oxide and a silicone resin containing a silicone compound represented by Chemical Formula 1 of: 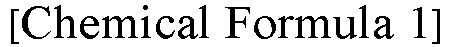 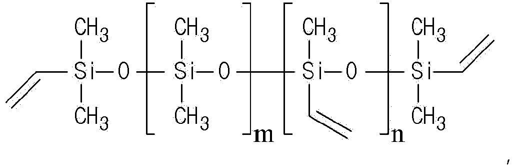 wherein in chemical formula 1, m and n are each an integer of 10 to 30.

4. The fire-resistant bus bar of claim 3, wherein the silicone resin and the metal oxide are contained at a weight ratio of 1:0.5 to 1:1.5.

5. The fire-resistant bus bar of claim 3, wherein the metal oxide containing the silicon oxide comprises at least one of pure silicon dioxide, silica, quartz, silica stone, tridymite, and keatite.

6. The fire-resistant bus bar of claim 1, wherein the protective layer comprises a glass fiber layer or a mica layer.

7. The fire-resistant bus bar of claim 1, wherein a diameter of the through-hole is less than a diameter of a head portion of a fastening member configured to be inserted into the through-hole to be coupled to the bus bar conductor part.

8. The fire-resistant bus bar of claim 1, wherein the through-hole includes:
a first hole with a diameter less than a diameter of a head portion of a fastening member configured to be coupled to the bus bar conductor part while passing through the through-hole; and
a second hole with a diameter greater than the diameter of the head portion of the fastening member.

9. The fire-resistant bus bar of claim 1, wherein a cut slit is provided in a perimeter of the through-hole of the cap part to be connected to the through-hole.

10. The fire-resistant bus bar of claim 1, wherein the cap part comprises: a first cover part including the through-hole therein and configured to cover upper surfaces of the opposite ends, and a first extension cover part extending downward from the first cover part to cover side surfaces of the opposite ends, and
the body covering part comprises: a second cover part configured to cover an upper surface of the body and a second extension cover part extending downward from the second cover part to cover side surfaces of the body.

11. The fire-resistant bus bar of claim 1, wherein the fire-resistant bus bar comprises a high-voltage bus bar configured to electrically connect high-voltage terminal parts of a plurality of battery modules.

12. The fire-resistant bus bar of claim 1, wherein the bus bar conductor part is coated with the fire-resistant silicone covering by performing insert injection molding by injecting the fire-resistant silicone into a mold into which the bus bar conductor part is inserted.

13. A battery pack comprising:
a plurality of battery modules;
the fire-resistant bus bar of any one of claims 1 to 12, the fire-resistant bus bar being configured to electrically connect the plurality of battery modules; and
a pack housing configured to accommodate the plurality of battery modules therein.

14. The battery pack of claim 13, wherein the pack housing comprises a partition installed between the plurality of battery modules,
opposite ends of a bus bar conductor part of the fire-resistant bus bar are electrically coupled to terminal parts of battery modules located at opposite sides of the partition, and
a cap part of the fire-resistant bus bar covers portions of the opposite ends and the terminal parts that are coupled to one another.

15. The battery pack of claim 14, wherein a bus bar installation through-hole or a bus bar installation groove is provided in the partition, and
the fire-resistant bus bar is seated in the bus bar installation through-hole or the bus bar installation groove.
